# EUROPEAN PATENT SPECIFICATION

(11) **EP 2 366 560 B1**
(45) Date of publication and mention of the grant of the patent: **11.09.2013**
(21) Application number: 09833195.2
(22) Date of filing: 15.12.2009
(51) Int. Cl.: B60C 9/20, B60C 9/18, B60C 9/22

(54) **PNEUMATIC TIRE**
LUFTREIFEN
PNEU

(30) Priority: 15.12.2008 JP 2008318474; 26.12.2008 JP 2008334811
(43) Date of publication of application: 21.09.2011
(73) Proprietor: Bridgestone Corporation, Tokyo 104-8340 (JP)
(72) Inventor: SUDA, Yasutaka, Kodaira-shi Tokyo 187-8531 (JP); NAKATA, Hiroshi, Kodaira-shi Tokyo 187-8531 (JP); YOSHIKAWA, Yusuke, Kodaira-shi Tokyo 187-8531 (JP); ONO, Takashi, Kodaira-shi Tokyo 187-8531 (JP); TSURUTA, Makoto, Kodaira-shi Tokyo 187-8531 (JP)
(74) Representative: Waldren, Robin Michael
(86) International application number: PCT/JP2009/006898
(87) International publication number: WO 2010/070887

(56) References cited:
- EP-A1- 1 637 354
- EP-A1- 1 707 402
- JP-A- 10 204 214
- JP-A- 2003 154 808
- JP-A- 2005 178 650
- JP-A- 2006 152 117
- JP-A- 2006 205 856
- JP-A- 2007 112 394
- US-A- 6 138 731

## Description

### Technical Field

The present invention relates to a pneumatic tire, in particular, a pneumatic tire capable of reducing rolling resistance, while maintaining good durability of a belt.

### Prior art

In a pneumatic tire, a belt is generally provided on the outer side in the tire radial direction of a crown portion of a carcass in order to reinforce a tread portion. A hoop-like constraint effect of the belt is lessened at a tread shoulder portion where cut ends of belt cords are located, than at the tread centre portion, whereby the belt expands in the radial direction at a larger magnitude at each tread shoulder portion than at the tread centre portion when the pneumatic tire is inflated by air pressure, thereby causing a durability problem in that separation between the belt and tread rubber is likely to occur at a portion corresponding to each tread shoulder portion. This durability problem has a grave impact on a tire having a relatively large aspect ratio, in which magnitude of radial expansion of a belt is significantly large at each tread shoulder portion.

In view of the aforementioned problem, there has been proposed and used a reinforcing structure in which a circumferential belt layer, constituted of wavy or zigzag-shaped winding cords or low-resilient straight cords extending in the tire circumferential direction, is disposed either on the inner peripheral side of a belt, on the outer peripheral side of the belt or between sub-layers of the belt. According to this reinforcing structure, radial expansion of the belt is constrained by the circumferential belt layer, whereby expansion in the radial direction at each tread shoulder portion is effectively suppressed and separation at belt side edges due to expansion in the radial direction of the belt can be advantageously prevented.

However, the circumferential belt layer does not effectively contribute to increasing bending rigidity in the widthwise direction of a tread in such reinforcing structure as described above. Therefore, for example, when a ground-contact surface of the tread steps on a protruding object such as a stone or the like during running of a vehicle, the belt and the circumferential belt layer are flexure-deformed to be significantly flexed radially inward, when viewed in a section in the widthwise direction of the tread, with a side edge position of the circumferential belt layer as the starting point of the flexure, whereby a slant angle of the belts and the like with respect to a road surface increases. As a result, shear strain in the widthwise direction between the belt layers also increases, thereby causing a problem in that separation may occur in the vicinity of the side edges of the belt layers due to concentration of stress and strain thereon.

In order to address the aforementioned problem, JP 06-219109, for example, discloses a pneumatic tire having a relatively thick protector including a specifically-designed foamed rubber layer. According to this tire, it is possible to sufficiently suppress radial expansion of a belt by constraint by a circumferential belt layer and effectively prevent separation at belt side edges, even in a case of a tire having a relatively high aspect ratio, from occurring without increasing tire weight, thereby making the tire demonstrate good durability of the belt.
Further, JP 2005-313837 discloses a technique of alleviating influences interacting between a circumferential belt and an intersecting belt by providing a cushion between the circumferential belt and the intersecting belt

Summary of the Invention

### Problems to be solved by the Invention

However, in the case of the tire of JP 06-219109, each shoulder portion lacks an intersecting belt and has only the circumferential belt therein when the circumferential belt is used as the innermost belt in the tire radial direction, whereby strain exerted on cushion rubber increases. Due to this, it is essentially required in JP 06-219109 to employ cushion rubber having a relatively high carbon content, i.e. high-heat generating rubber having relatively high rolling resistance, in order to improve fracture resistance of the cushion rubber. Therefore, there is a demand for improvement in the tire of JP 06-219109 in terms of making enhancement of belt durability and decrease in rolling resistance of a tire more compatible.

Regarding the pneumatic tire of JP 2005-313837, which corresponds to the preamble of claim 1, although the cushion rubber thereof causes some degree of effect of suppressing separation at belt side edge portions, there is a demand for further improvement of belt durability. Further, as in the pneumatic tire of JP 06-219109, high-heat generating rubber having relatively high rolling resistance is preferably used and thus improvement is demanded in the pneumatic tire of JP 2005-313837 in terms of making enhancement of belt durability and decrease in rolling resistance of a tire more compatible.

An object of the present invention is to provide a pneumatic tire having relatively low rolling resistance, while maintaining good durability of a belt, by improving an intersecting belt layer and disposing specific cushion rubber between each end portion of a circumferential belt and a carcass.

### Means for solving the Problems

The inventors of the present invention, as a result of a keen study to solve the problems described above, have discovered that separation caused by concentration of stress and strain on a side edge of a belt layer can be prevented from occurring by designing at least one of the inner belt layer and the outer belt layer constituting an intersecting belt layer to be a broad-width belt layer of which width is larger than the width of a circumferential belt. Further, the inventors have discovered that: stress exerted on the cushion rubber in the prior art (stress exerted on a low-heat generating portion described below in the present invention) is alleviated and thus low-heat generating rubber having a relatively small hysteresis loss can be used as the cushion rubber in the aforementioned structure; that is, it is possible to suppress energy loss caused by occurrence of repeated deformations of rubber during running of a tire at the minimum level and significantly improve tire rolling resistance properties by providing a low-heat generating rubber portion of which hysteresis loss is less than 0.2 between an end portion of the circumferential belt and a carcass.

The present invention is based on the aforementioned discoveries and the main structure thereof is as follows.
(1) A pneumatic tire having: at least one circumferential belt layer constituted of a rubber-coated layer of winding cords extending in the tire circumferential direction, provided on the outer side in the tire radial direction of a crown portion of a carcass extending in a toroidal shape; an intersecting belt layer constituted of an inner belt layer and at least one outer belt layer disposed on the outer side in the radial direction of the inner belt layer, the inner belt layer and the outer belt layer being each formed by a rubber-coated layer of cords extending at a predetermined inclination angle with respect to the tire circumferential direction, the inner belt layer and the outer belt layer being disposed so as to intersect each other; and a tread layer, wherein the circumferential belt layer, the intersecting belt layer and the tread layer are disposed on the carcass in this order, wherein at least one of the inner belt layer and the outer belt layer constituting the intersecting belt layer is a broad-width belt layer of which width is larger than the width of the circumferential belt, characterized in that a low-heat generating rubber portion of which hysteresis loss is less than 0.2 is provided between an end portion of the circumferential belt and the carcass; and the pneumatic tire further comprises a cushion rubber portion provided on the outer side in the radial direction of the low-heat generating rubber portion such that a rear end on the inner side in the widthwise direction thereof is inserted between the circumferential belt layer and the intersecting belt layer, wherein the elastic modulus of the low-heat generating rubber portion is set to be equal to or larger than elastic modulus of coating rubber coating the circumferential belt layer, and elastic modulus of the cushion rubber portion is set to be equal to or smaller than the elastic modulus of the coating rubber coating the circumferential belt layer.

The pneumatic tire of (1) above, wherein an end portion on the outer side in the tire widthwise direction of the low-heat generating rubber portion extends to a shoulder portion.

The pneumatic tire of (1) or (2) above, wherein a width W1 of the inner belt layer is set to be larger than a width W2 of the outer belt layer by 10 to 50 mm at each side in the tire widthwise direction, provided that a width of the circumferential belt layer is W3, W1, W2 and W3 satisfy a relationship formula W2 ≤ W3 ≤ W1, and a width of the belt layer having the largest width among the belt layers of the intersecting belt layer is at least 80 % of the maximum width W4 in the tire widthwise direction, of the carcass, in a section thereof in the tire widthwise direction.

### Effect of the Invention

According to the present invention, it is possible to provide a pneumatic tire having relatively low rolling resistance, while maintaining good durability of a belt thereof.

### Brief Description of the Drawings

FIG. 1 is a side sectional view of a tire according to the present invention.
FIG. 2 is an enlarged side sectional view of a vicinity of a low-heat generating rubber portion.
FIG. 3 is an enlarged sectional view of a cushion rubber portion of FIG. 1.
FIG. 4 is an enlarged sectional view of the low-heat generating rubber portion of FIG. 1.
FIG. 5 is a schematic view showing large-small relationships between width dimensions of respective belt layers of FIG. 1

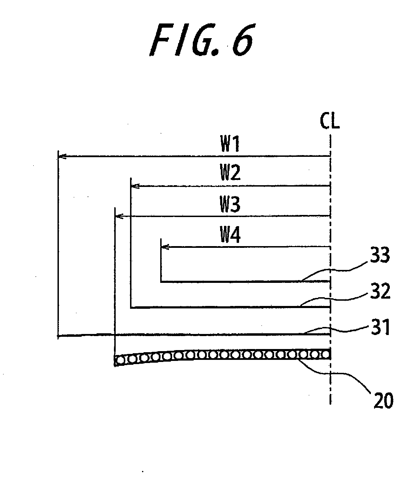

FIG. 6 is a schematic view showing a large-small relationship between width dimensions of respective belt layers in Examples.

### Best Embodiment for carrying out the Invention

A structure of the present invention and reasons for specifying the invention to the structure will be described with reference to the drawings.
It should be noted that the drawings are schematic and thus thickness values, ratios therebetween, and the like of respective material layers shown in the drawings may be different from those of an actual product. Accordingly, specific thickness values and dimensions in an actual product are to be determined in consideration of descriptions below. There may exist differences in dimensional relationships and ratios between the respective drawings.

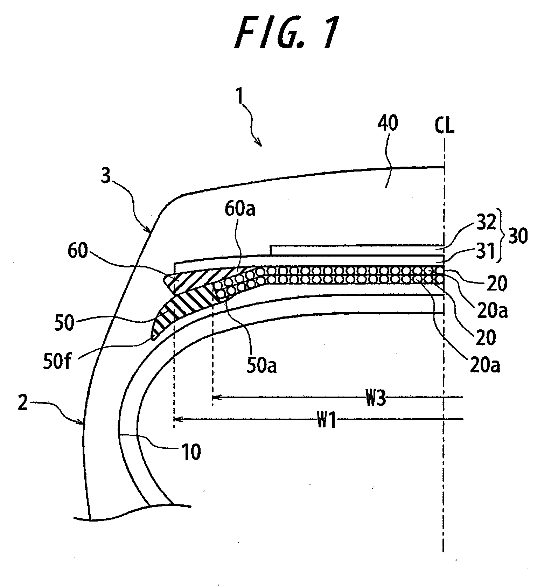

FIG. 1 is sectional view in the widthwise direction of a portion of a tire of the present invention. The present invention provides, as shown in FIG. 1, a pneumatic tire 1 having: at least one circumferential belt layer 20 formed by spirally winding in the tire circumferential direction, on the outer side in the tire radial direction of a crown portion of a carcass 10 extending in a toroidal shape, a rubber-coated layer of winding cords 20a extending in the circumferential direction; an intersecting belt layer 30 constituted of an inner belt layer 31 and at least one outer belt layer 32 disposed on the inner belt layer, the inner belt layer and the outer belt layer being each formed by a rubber-coated layer of cords (not shown) extending at a predetermined inclination angle with respect to the tire circumferential direction, the inner belt layer and the outer belt layer(s) being disposed so as to intersect each other; and a tread rubber 40.

Specifically, the present invention is characterized in that: at least one of the inner belt layer 31 and the outer belt layer 32 constituting the intersecting belt layer 30 (the inner belt layer 31 in FIG. 1) is a broad-width belt layer of which width W1 is larger than the width W3 of the circumferential belt 20; and a low-heat generating rubber portion 50 of which hysteresis loss is less than 0.2 is provided between an end portion of the circumferential belt 20 and the carcass 10.

In the present invention adopting the aforementioned structure, not only separation caused by concentration of stress and strain on side edges of the belt layers is prevented from occurring but also stress exerted on the cushion rubber in the prior art (stress exerted on the low-heat generating portion 50 in the present invention) can be alleviated because the broad-width belt layer 31 enhances shear rigidity on the outer side in the widthwise direction of the intersecting belt layer 30 of the tread portion. As a result, low-heat generating rubber having a relatively small hysteresis loss (hysteresis loss of less than 0.2) can be used as a material of the cushion rubber and thus energy loss due to occurrence of repeated deformations of rubber during running of a tire can be suppressed to the minimum, whereby rolling resistance of the tire can be reduced.

Tire rolling resistance is presumably caused by following three factors: (1) energy loss of rubber due to occurrence of repeated deformations of rubber during running of a tire; (2) energy loss due to friction generated when the tire is brought into contact with a road surface; and (3) energy loss due to the tire moving in the air. It is assumed that at least 80% of tire rolling resistance is particularly derived from the component of the factor (1) among the three factors (1)-(3) above and that reduction of energy loss associated with repeated deformations is critically important in terms of reducing rolling resistance. This is why the pneumatic tire of the present invention, using low-heat generating rubber having a smaller hysteresis loss than the conventional cushion rubber, causes a good effect of reducing tire rolling resistance.

In the present embodiment, hysteresis loss described above represents energy loss consumed inside rubber when the rubber, which has been deformed, restores the original shape thereof. Hysteresis loss may be expressed as tan δ. A specific value of tan δ can be determined by a dynamic tensile test and a dynamic shear test as prescribed by JIS K6394 and JIS K7198. Hysteresis loss (tan δ) of the low-heat generating rubber portion 50 of the pneumatic tire 1 of the present invention is set to be less than 0.2 because, in a case where the hysteresis loss is equal to or larger than 0.2, the hysteresis loss is too large to sufficiently reduce tire rolling resistance.

The low-heat generating rubber portion 50 of the present invention represents a member corresponding to a cushion rubber formed by low-heat generating rubber as a material. In the present embodiment, there can be obtained a good effect of reducing rolling resistance of a tire, while still alleviating stress at a required level, by replacing the conventional cushion rubber having a relatively high carbon content and thus susceptible to fracture with a member having a relatively low carbon content and thus less susceptible to fracture.

Further, a width W1 of the broad-width belt layer (the inner belt layer 31 in FIG. 1) is preferably within the range of 110 to 150 % with respect to a width W3 of the circumferential belt 20, as shown in FIG, 1. In a case where the width W1 of the broad-width belt layer is less than 110% of the width W3 of the circumferential belt 20, stress exerted on the low-heat generating rubber portion 50 may not be sufficiently alleviated, which makes it impossible to use low-heat generating rubber of which tan δ is less than 0.2. In a case where the width W1 exceeds 150% of the width W3, the width W 1 is too large, whereby the broad-width belt layer must be curved along a curved portion of each tread shoulder portion and a production failure may occur. In a case where the broad-width belt layer W1 is maintained sufficiently broad but the circumferential belt layer is made relatively narrow, radial expansion of each tread shoulder portion increases, thereby possibly causing belt separation.

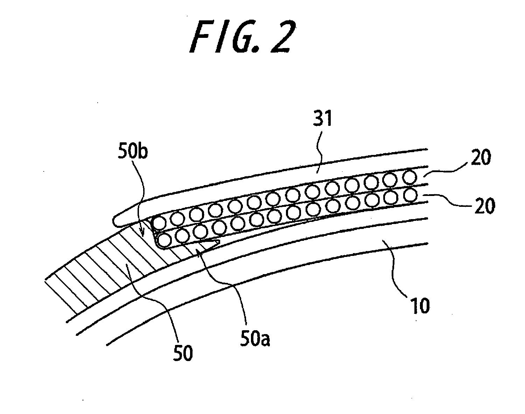

FIG. 2 is a side sectional view showing a vicinity of the low-heat generating rubber portion 50 of the pneumatic tire of the present invention in an enlarged manner. The low-heat generating rubber portion 50 is preferably disposed so as to lie between an end portion of the circumferential belt layer 20 and the carcass 10 (at a position indicated by the reference number 50a) and cover the end portion of the circumferential belt layer 20 (at a position indicated by the reference number 50b), as shown in FIG. 2, because then the low-heat generating rubber portion 50 can fix the end portion of the circumferential belt layer 20 and also function as cushion rubber between the intersecting belt (the inner belt layer 31 in FIG. 1) and the carcass 10.

Further, an end portion 50f on the outer side in the tire widthwise direction of the low-heat generating rubber portion 50 preferably extends to a shoulder portion 3, as shown in FIG. 1, so that low-heat generating cushion rubber can follow a carcass line naturally.

The maximum thickness of the low-heat generating rubber portion 50 is preferably within the range of 5 to 12 mm. In a case where the maximum thickness of the low-heat generating rubber portion 50 is less than 5 mm, an effect of alleviating shear strain may not be sufficiently obtained, possibly causing separation at end portons of the intersecting belt layer. In a case where the maximum thickness of the low-heat generating rubber portion 50 exceeds 12 mm, the inner belt layer 31 is locally lifted up on the outer side in the tire radial direction significantly by the low-heat generating rubber portion 50 and the tread rubber must be made thin accordingly, possibly causing a problem of complicated production process and a concern of durability when a ground-contact surface of the tread is damaged by cutting.

The pneumatic tire 1 of the present invention further includes a cushion rubber portion 60 provided on the outer side in the radial direction of the low-heat generating rubber portion 50 such that a rear end portion 60a on the inner side in the widthwise direction thereof is inserted between the circumferential belt layer 20 and the intersecting belt layer 30, as shown in FIG. 1, because troubles such as cutting of the circumferential belt 20, separation occurring between the circumferential belt 20 and the intersecting belt 30, and the like can be further suppressed by the cushion rubber portion 60.

In a case where the pneumatic tire 1 lacks the cushion rubber portion 60, separation between the circumferential belt 20 and the intersecting belt 30 may not be effectively suppressed.

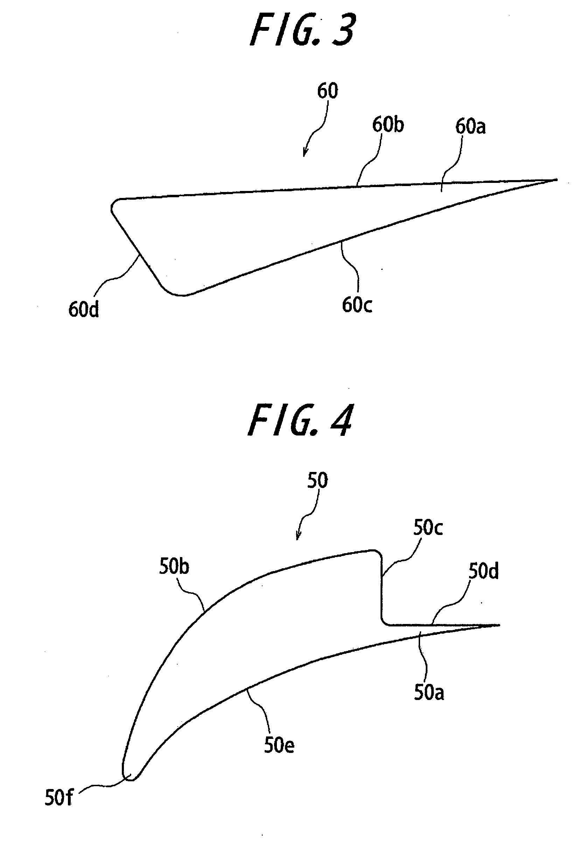

In the present embodiment, FIG. 3 is an enlarged sectional view of a cushion rubber portion of FIG. 1 and FIG. 4 is an enlarged sectional view of the low-heat generating rubber portion of FIG. 1.

As shown in FIG. 3, the cushion rubber portion 60 is formed to have a substantially triangular sectional shape in which thickness in the tire radial direction gradually increases toward the outer side in the tire widthwise direction and gradually decreases toward the inner side in the tire widthwise direction. The rear end portion 60a on the inner side in the tire widthwise direction is disposed to be inserted and accommodated in a gap having a substantially triangular section formed between: an outer side end in the tire widthwise direction of the circumferential belt layer 20 bent downward to be positioned on the outer side in the tire widthwise direction and on the inner side in the tire radial direction; and an outer side end in the tire widthwise direction of the inner belt layer 31 extending substantially in parallel with the tire widthwise direction. The aforementioned gap is formed to have a sectional shape in which distance in the radial direction between the circumferential belt 20 and the inner belt layer 31 increases toward the outer side in the tire widthwise direction, as shown in FIG. 1. The cushion rubber portion 60 is defined by an upper face 60b disposed on the outer side in the radial direction, a lower face 60c disposed on the inner side in the radial direction and a side face 60d disposed on the outer side in the tire widthwise direction.

Elastic modulus of the cushion rubber portion 60 is set not higher than elastic modulus of coating rubber CR covering the circumferential belt layer 20 because then there can be obtained an effect that the cushion rubber 60 can absorb movement in the tire widthwise direction of the circumferential belt layer 20. It is preferable that the cushion rubber portion 60 is softer than the coating rubber CR of the circumferential belt layer 20 and 100% modulus (mod) of the cushion rubber portion 60 is equal to or lower than 4 MPa. In the present embodiment, "100% modulus (mod)" represents tensile stress required to produce 100% elongation of rubber.

The low-heat generating rubber portion 50 is defined by an upper face 50b disposed on the outer side in the tire radial direction, a vertical face 50c extending from the tire widthwise direction-inner end of the upper face 50b toward the inner side in the tire radial direction, a lateral face 50d extending from the radial direction-inner end of the vertical face 50c toward the inner side in the tire widthwise direction, and a lower face 50e disposed on the inner side in the tire radial direction, as shown in FIG. 4. The rear end portion 50a defined by the lateral face 50d and the lower face 50e abuts against the lower portion of the outer side end in the tire widthwise direction of the circumferential belt layer 20, as shown in FIG. 1. In the present embodiment, it is preferable that the inner side end in the tire widthwise direction of the rear end portion 50a is located on the inner side (specifically, maximally 50 mm on the inner side) in the tire widthwise direction than the outer side end in the tire widthwise direction of the inner belt layer 31, as shown in FIG. 1. In a case where the inner side end in the tire widthwise direction of the rear end portion 50a is not positioned to satisfy the aforementioned requirement, the rear end portion 50a of the low-heat generating rubber portion 50 is too thick and strain at the outer side end in the tire widthwise direction of the circumferential belt layer 20 increases, possibly causing troubles. Further, it is preferable that the outer side end portion 50f in the tire widthwise direction of the low-heat generating rubber portion 50 is located on the outer side (specifically, at least 10 mm on the outer side) in the tire widthwise direction than the outer side end in the tire widthwise direction of the inner belt layer 31, as shown in FIG. 1. In a case where the outer side end portion 50f in the tire widthwise direction of the low-heat generating rubber portion 50 is not positioned to satisfy the aforementioned requirement, the low-heat generating rubber portion 50 may not sufficiently alleviate stress between the belt layers 20, 30 and the ply 10, possibly causing troubles in the belt layers 20, 30.

Further, elastic modulus of the low-heat generating rubber portion 50 is preferably set not lower than the elastic modulus of the coating rubber CR coating the circumferential belt layer 20 because then the low-heat generating rubber portion 50 can suppress movement of the circumferential belt 20 to reduce elongation of cords thereof, whereby cutting of the circumferential belt 20 can be prevented. Further, 100% modulus (mod) of the low-heat generating rubber portion 50 is preferably in the range of 3.5 to 14 Mpa.

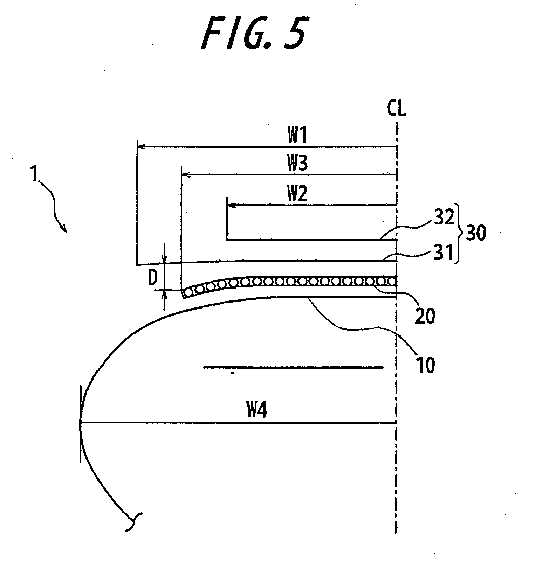

FIG. 5 is a schematic view showing large-small relationships in width dimensions of the respective belt layers of FIG. 1. W1 to W4 shown in FIG. 5 represent width dimensions of the respective belt layers along the tire widthwise direction. Specifically, W1 represents a width of the inner belt layer 31, W2 represents a width of the outer belt layer 32, W3 represents a width of the circumferential belt layer 20, and W4 represents the maximum width in the tire widthwise direction of the carcass 10.

As shown in FIG. 5, the width W1 of the inner belt layer 31 is set to be larger than a width W2 of the outer belt layer 32 by 10 to 50 mm at each side in the tire widthwise direction; provided that a width of the circumferential belt layer 20 is W3, then W1, W2 and W3 satisfy a relationship formula W2 ≤ W3 ≤ W1; and a width of the belt layer having the largest width among the belt layers of the intersecting belt layer 30 (the inner belt layer in FIG. 5) is at least 80 % of the maximum width W4 in a section in the tire widthwise direction, of the carcass 10.

The reason why the width W1 of the inner belt layer 31 is set to be larger than a width W2 of the outer belt layer 32 by 10 to 50 mm at each side in the tire widthwise direction (i.e. (W2 - W1)/2 is in the range of 10 to 50 mm) is that: if W1 is less than 10 mm, the outer side end portion in the tire widthwise direction of the inner belt layer 31 and the corresponding outer side end portion in the tire widthwise direction of the outer belt layer 32 are too close to each other, whereby strains generated at the respective outer side end portions in the tire widthwise direction increase and separation may occur between the inner belt layer 31 and the outer belt layer 32; and if W1 exceeds 50 mm, rigidity of the inner belt layer 31 decreases, possibly causing generation of partial wear and/or deterioration of driving stability.

The reason why the large-small relationships between the width dimensions W1, W2, W3 of the respective belt layers 31, 32, 20 are set so as to satisfy W2≤ W3 ≤ W1 is that: in a case where W3 > W1, a possibility that separation occurs between the inner belt layer 31 and the outer belt layer 32 increases exceedingly; in a case where W3 < W2, the inner belt layer 31 and the outer belt layer 32 cause a significant influence on the circumferential belt 20, whereby separation may occur between the inner belt layer 31, the outer belt layer 32 and the circumferential belt layer 20, possibly followed by cutting of the circumferential belt 20.
An elongation rate of the radial dimension at an end portion of the circumferential belt layer 20 when the inside of the pneumatic tire 1 is inflated by air is preferably equal to or lower than 0.3%.

The reason why a width of the belt layer having the largest width among the belt layers of the intersecting belt layer 30 (the inner belt layer 31 in FIG. 5) is at least 80 % of the maximum width W4 in a section in the tire widthwise direction of the carcass 10 is that, if the aforementioned ratio is less than 80%, belt rigidity of the shoulder portion 3 between the tread portion 40 and a sidewall portion 2 as a tire side surface decreases, possibly causing partial wear at the shoulder portion 3.

It is preferable to ensure at least 3 mm of clearance D in the radial direction between the outer side end in the tire widthwise direction of the circumferential belt layer 20 and the inner belt layer 31, as shown in FIG. 5.

The aspect ratio of the pneumatic tire 1 of the present invention is preferably not higher than 70%. In a case where the aspect ratio exceeds 70%, radial growths of the belts in the tread shoulder portion 3 is relatively small, whereby advantages caused by the circumferential belt are lessened.

The foregoing descriptions merely illustrate one example of the embodiment of the present invention and various modifications can be made thereto within the scope of accompanying claims. For example, although the intersecting belt layer 30 includes two sub-layers in the embodiment described above, the intersecting belt can be designed to have three or more number of sub-layers.

### Examples

### (Example 1)

Example 1 used as a sample tire a pneumatic ultra flat Super Single tire (tire size: 495/45R22.5, rim width: 17) for large-size trucks and buses, inflated by air at an inner pressure of 900 KPa, having: at least one circumferential belt layer 20 formed, by a rubber-coated layer of winding cords 20a extending in a wavy manner in the tire circumferential direction, on the outer side in the tire radial direction of a crown portion of a carcass 10 extending in a toroidal shape; an intersecting belt layer 30 constituted of an inner belt layer 31 and at least one outer belt layer 32 disposed on the inner belt layer, the inner belt layer and the outer belt layer being each formed by a rubber-coated layer of cords (not shown) extending at a predetermined inclination angle with respect to the tire circumferential direction, the inner belt layer and the outer belt layer(s) being disposed so as to intersect each other; and a tread rubber 40, the circumferential belt layer 20, the intersecting belt layer 30 and the tread layer 40 being disposed on the carcass 10 in this order, wherein: the inner belt layer 31 is a broad-width belt layer of which width W1 is larger than a width W3 of the circumferential belt 20; and a low-heat generating rubber portion 50 of which hysteresis loss (tan δ) is 0.06 is provided between an end portion of the circumferential belt 20 and the carcass 10 and on a side of said end portion of the circumferential belt layer 20.

### (Comparative Example 1)

Comparative Example 1 used as a sample tire a pneumatic tire which is substantially the same as the pneumatic ire of Example 1, except that in the former widths of the inner belt layer 31 and the outer belt layer 32 constituting the intersecting belt layer 30 are narrower than a width of the circumferential belt layer 20 (in other words, a broad-width belt layer does not exist) and the low-heat generating rubber portion 50 of the latter is replaced with cushion rubber having hysteresis loss (tan δ) of 0.26 and being highly susceptible to fracture.

### (Comparative Example 2)

Comparative Example 2 used as a sample tire a pneumatic tire which is substantially the same as the pneumatic ire of Example 1, except that in the former widths of the inner belt layer 31 and the outer belt layer 32 constituting the intersecting belt layer 30 are narrower than a width W3 of the circumferential belt layer 20 (in other words, a broad-width belt layer does not exist).

### (Comparative Example 3)

Comparative Example 3 used as a sample tire a pneumatic tire which is substantially the same as the pneumatic ire of Example 1, except that in the former the low-heat generating rubber portion 50 of the latter is replaced with cushion rubber having hysteresis loss (tan δ) of 0.26 and being highly susceptible to fracture.

### (Examples 2 and 3, Comparative Examples 4-6)

Example 2, Example 3 and Comparative Examples 4-6 each used as a sample tire a pneumatic tire which is substantially the same as the pneumatic ire of Example 1, except that in the former the relevant values, such as the widthwise dimensions, of the circumferential belt layer and the intersecting belt layer of the tire are set as shown in Table 2 and that the pneumatic tire of Example 3 has a three-layered structure in which the inner belt layer 31, the outer belt layer 32 and a third belt layer 33 are laminated from the inner side toward the outer side in the tire radial direction.

### (Evaluation 1) Rolling resistance

Rolling resistance of a tire was evaluated by rotating each of the pneumatic tires of Example 1 and Comparative Examples 1 to 3 on an indoor drum tester at a testing speed of 80 km/h with load of 5800 kg exerted thereon; and measuring a shift width, in the front-back direction, of the tire shaft during running of the tire by load cell. The results are shown in Table 1 as relative values with respect to the rolling resistance of the sample tire of Comp. Example 1 being 100.

### (Evaluation 2) Heat generation properties

Heat generation properties were evaluated for each of the pneumatic tires of Example 1 and Comparative Examples 1 to 3 according to the FMVSS119 durability test conditions by increasing speed by 10 km/h at each step-to-step shift in the four steps thereof. The results are shown in Table 1 as relative values with respect to the running distance observed in the sample tire of Comp. Example 1 being 100.

**[Table 1]**

| | Broad-width belt layer | Cushion rubber | | Evaluation | |
|---|---|---|---|---|---|
| | | Type | tan δ | Rolling resistance | Heat generation properties |
| Example 1 | Present | Low-heat generating rubber portion | 0.06 | 11.5 | 100 |
| Comp. Example 1 | Absent | Conventional cushion rubber | 0.26 | 100 | 100 |
| Comp. Example 2 | Absent | Low-heat generating rubber portion | 0.06 | 105 | 85 (Cushion rubber fractured) |
| Comp. Example 3 | Present | Conventional cushion rubber | 0.26 | 100 | 95 |

It is understood from the results shown in Table 1 that the pneumatic tire of Example 1 can suppress rolling resistance and heat generation properties lower than the pneumatic tires of Comparative Examples 1 to 3. It is also understood that the tire of Comp. Example 1, which is a conventional pneumatic tire, exhibits higher rolling resistance than the pneumatic tire of Example 1, although an effect of heat generation properties of the former is equal to that of the latter or Example 1. The pneumatic tire of Comparative Example 2 lacking a broad-width belt layer generates heat significantly and cushion thereof fractured during evaluation, although rolling resistance thereof is relatively close to that of the pneumatic tire of Example 1. Further, it is understood that Comparative Example 3 in which cushion rubber fails to be optimized exhibits poorer effects in both rolling resistance and heat generation properties than Example 1.

### (Evaluation 3) Durability

Durability was evaluated by rotating each of the pneumatic tires of Example 2, Example 3 and Comparative Examples 4 to 6 on an indoor drum tester to run 100,000 km at 80 km/h with load of 5800 kg exerted thereon and detecting length of separation between belts and the number of cut cords of the circumferential belt layer. The length and the number are expressed as indices relative to the corresponding length and number of Comparative Example 4, which are 100, respectively. The smaller indices of length of separation between belts and the number of cut cords of the circumferential belt represent the better results.

### (Evaluation 4) Driving stability

Driving stability was evaluated by: mounting each of the pneumatic tires of Example 2, Example 3 and Comparative Examples 4 to 6 on a drive shaft of a tractor head; carrying out slalom driving in a state of towing a trailer with a predetermined load thereon; scoring the tire according to a feeling test by a driver; and obtaining a feeling index of the tire relative to the feeling score of Comparative Example 4 being 100. The larger feeling index represents the better result.

### (Evaluation) Partial wear

Partial wear was evaluated by: mounting each of the pneumatic tires of Example 2, Example 3 and Comparative Examples 4 to 6 on a drive shaft of a tractor head; making the tire run 50,000 km in a state of towing an trailer with no load; measuring a volume of worn-out tread rubber at an end portion in the tire widthwise direction of the tread; and obtaining a partial wear vol. index of the tire relative to the partial wear vol. index of Comparative Example 4 being 100. The smaller partial wear vol. index represents the better result.

**[Table 2]**

| | Width of third belt layer | Width of outer belt layer | Width of inner belt layer | Width of circumferential belt layer | Width of carcass | 100% modulus of low-heat generating rubber portion | Clearance in the radial direction between outer side end in tire widthwise direction of circumferential belt layer and the inner belt layer | 100% modules of cushion rubber portion |
|---|---|---|---|---|---|---|---|---|
| | (mm) | (mm) | (mm) | (mm) | (mm) | (mod) | (mm) | (mod) |
| Example 2 | - | 400 | 440 | 420 | 494 | 4.0 | 4.0 | 2.2 |
| Example 3 | 200 | 400 | 450 | 430 | 494 | 73 | 4.0 | 2.0 |
| Comp. Example 4 | - | 220 | 420 | 370 | 494 | 2.3 | 1.5 | 6.5 |
| Comp. Example 5 | - | 390 | 430 | 350 | 494 | 2.3 | 1.2 | 6.5 |
| Comp. Example 6 | - | 400 | 440 | 420 | 494 | 2.3 | 1.5 | 6.5 |

**[Table 3]**

| | Durability (1) (Index of number of cut cords of circumferential belt) | Driving stability (2) (Index of length of separation between belts) | Driving stability (Feeling index) | Partial wear (partial wear voL index) |
|---|---|---|---|---|
| Example 2 | 0 | 24 | 135 | 38 |
| Example 3 | 0 | 24 | 140 | 38 |
| Comp. Example 4 | 100 | 100 | 100 | 100 |
| Comp. Example 5 | 131 | 143 | 120 | 93 |
| Comp. Example 6 | 21 | 54 | 145 | 46 |

It is understood from the results of Table 3 that the sample tires of Examples 2 and 3 exhibit better results than the sample tires of Comparative Examples 4 to 6 in every index of the driving stability and partial wear.

### Industrial Applicability

According to the present invention, it is possible to provide a pneumatic tire capable of reducing rolling resistance, while maintaining good durability of a belt.

### Explanation of Reference Numerals

- 1: Pneumatic tire
- 2: Sidewall portion
- 3: Shoulder portion
- 10: Carcass
- 20: Circumferential belt layer
- 30: Intersecting belt layer
- 31: Inner belt layer
- 32: Outer belt layer
- 40: Tread portion
- 50: Low-heat generating rubber portion

## Claims

1. A pneumatic tire (1) having: at least one circumferential belt layer (20a) constituted of a rubber-coated layer of winding cords (20a) extending in the tire circumferential direction, provided on the outer side in the tire radial direction of a crown portion of a carcass (10) extending in a toroidal shape; an intersecting belt layer (30) constituted of an inner belt layer (31) and at least one outer belt layer disposed on the outer side in the radial direction of the inner belt layer (31), the inner belt layer (31) and the outer belt layer (32) being each formed by a rubber-coated layer of cords extending at a predetermined inclination angle with respect to the tire circumferential direction, the inner belt layer (31) and the outer belt layer (32) being disposed so as to intersect each other; and a tread layer (40), wherein the circumferential belt layer (20a), the intersecting belt layer (30) and the tread layer (40) are disposed on the carcass (10) in this order,
wherein at least one of the inner belt layer (31) and the outer belt layer (32) constituting the intersecting belt layer (30) is a broad-width belt layer of which width is larger than the width of the circumferential belt, **characterized in that**:
a low-heat generating rubber portion (50) of which hysteresis loss is less than 0.2 is provided between an end portion of the circumferential belt and the carcass (10); and
the pneumatic tire (1) further comprises a cushion rubber portion (60) provided on the outer side in the radial direction of the low-heat generating rubber portion (50) such that a rear end (60a) on the inner side in the widthwise direction thereof is inserted between the circumferential belt layer (20a) and the intersecting belt layer (30),
wherein elastic modulus of the low-heat generating rubber portion (50) is set to be equal to or larger than elastic modulus of coating rubber coating the circumferential belt layer (20a), and elastic modulus of the cushion rubber portion is set to be equal to or smaller than the elastic modulus of the coating rubber coating the circumferential belt layer (20a).

2. The pneumatic tire (1) of claim 1, wherein an end portion (50f) on the outer side in the tire widthwise direction of the low-heat generating rubber portion (50) extends to a shoulder portion (3).

3. The pneumatic tire (1) of claim 1, wherein
a width W1 of the inner belt layer (31) is set to be larger than a width W2 of the outer belt layer (32) by 10 to 50 mm at each side in the tire widthwise direction,
provided that a width of the circumferential belt layer (20a) is W3, W1, W2 and W3 satisfy a relationship formula W2 ≤ W3 ≤ W1, and
a width of the belt layer having the largest width among the belt layers of the intersecting belt layer (30) is at least 80 % of the maximum width W4 in the tire widthwise direction, of the carcass (10), in a section thereof in the tire widthwise direction.

## Patentansprüche

1. Luftreifen (1), der aufweist: mindestens eine periphere Gürtellage (20a), die aus einer gummibeschichteten Lage von Wickelkorden (20a) besteht, die sich in der Umfangsrichtung des Reifens erstrecken, bereitgestellt auf der äußeren Seite in der radialen Reifenrichtung eines Zenitabschnittes einer Karkasse (10), die sich in einer Ringform erstreckt; eine sich schneidende Gürtellage (30), die aus einer inneren Gürtellage (31) und mindestens einer äußeren Gürtellage besteht, die auf der Außenseite in der radialen Richtung der inneren Gürtellage (31) angeordnet ist, wobei die innere Gürtellage (31) und die äußere Gürtellage (32) jeweils aus einer gummibeschichteten Schicht von Korden gebildet wird, die sich unter einem vorgegebenen Neigungswinkel mit Bezugnahme auf die Umfangsrichtung des Reifens erstrecken, wobei die innere Gürtellage (31) und die äußere Gürtellage (32) so angeordnet sind, dass sie sich jeweils miteinander schneiden; und eine Laufflächenlage (40), wobei die periphere Gürtellage (20a), die sich schneidende Gürtellage (30) und die Laufflächenlage (40) auf der Karkasse (10) in dieser Reihenfolge angeordnet sind,
wobei mindestens eine der inneren Gürtellage (31) und der äußeren Gürtellage (32), die die sich schneidende Gürtellage (30) bilden, eine Gürtellage mit großer Breite ist, deren Breite größer ist als die Breite des peripheren Gürtels, **dadurch gekennzeichnet, dass**:
ein eine geringe Wärme erzeugender Gummiabschnitt (50), dessen Hystereseverlust kleiner als 0,2 ist, zwischen einem Endabschnitt des peripheren Gürtels und der Karkasse (10) bereitgestellt wird; und
der Luftreifen (1) außerdem einen Polstergummiabschnitt (60) aufweist, der auf der äußeren Seite in der radialen Richtung des eine geringe Wärme erzeugenden Gummiabschnittes (50) bereitgestellt wird, so dass ein hinteres Ende (60a) auf der Innenseite in dessen Breitenrichtung zwischen der peripheren Gürtellage (20a) und der sich schneidenden Gürtellage (30) eingesetzt wird,
wobei der Elastizitätsmodul des eine niedrige Wärme erzeugenden Gummiabschnittes (50) so eingestellt wird, dass er gleich oder größer ist als der Elastizitätsmodul des Beschichtungsgummis, der die periphere Gürtellage (20a) beschichtet, und wobei der Elastizitätsmodul des Polstergummiabschnittes so eingestellt wird, dass er gleich oder kleiner als der Elastizitätsmodul des Beschichtungsgummis ist, der die periphere Gürtellage (20a) beschichtet.

2. Luftreifen (1) nach Anspruch 1, bei dem sich ein Endabschnitt (50f) auf der Außenseite in der Breitenrichtung des Reifens des eine geringe Wärme erzeugenden Gummiabschnittes (50) bis zu einem Schulterabschnitt (3) erstreckt.

3. Luftreifen (1) nach Anspruch 1, bei dem
eine Breite W 1 der inneren Gürtellage (31) größer eingestellt wird als eine Breite W2 der äußeren Gürtellage (32), um 10 bis 50 mm auf jeder Seite in der Breitenrichtung des Reifens,
vorausgesetzt, dass eine Breite der peripheren Gürtellage (20a) W3, W1, W2 beträgt und W3 eine Beziehungsformel W2 ≤ W3 ≤ W1 erfüllen, und
eine Breite der Gürtellage, die die größte Breite unter den Gürtellagen der sich schneidenden Gürtellage (30) aufweist, mindestens 80 % der maximalen Breite W4 in der Breitenrichtung des Reifens der Karkasse (10) in einem Schnitt davon in der Breitenrichtung des Reifens beträgt.

## Revendications

1. Bandage pneumatique (1), comportant : au moins une couche de ceinture circonférentielle (20a), constituée par une couche revêtue de gomme de câblés d'enroulement (20a), s'étendant dans la direction circonférentielle du bandage pneumatique, agencée sur le côté externe, dans la direction radiale du bandage pneumatique, d'une partie de sommet d'une carcasse (10) s'étendant sous une forme toroïdale ; une couche de ceinture à intersection (30), constituée par une couche de ceinture interne (31) et au moins une couche de ceinture externe agencée sur le côté externe dans la direction radiale de la couche de ceinture interne (31), la couche de ceinture interne (31) et la couche de ceinture externe (32) étant formées chacune par une couche revêtue de gomme de câblés s'étendant à un angle d'inclinaison prédéterminé par rapport à la direction circonférentielle du bandage pneumatique, la couche de ceinture interne (31) et la couche de ceinture externe (32) étant agencées de sorte à se couper l'une l'autre ; et une couche de bande de roulement (40), la couche de ceinture circonférentielle (20a), la couche de ceinture à intersection (30) et la couche de bande de roulement (40) étant agencées dans cet ordre sur la carcasse (10) ;
dans lequel au moins une couche, la couche de ceinture interne (31) ou la couche de ceinture externe (32), constituant la couche de ceinture à intersection (30), est une couche de ceinture de grande largeur, dont la largeur est supérieure à la largeur de la ceinture circonférentielle, **caractérisé en ce que** :
une partie de gomme à génération de chaleur réduite (50), dont la perte par hystérésis est inférieure à 0,2, est fournie entre une partie d'extrémité de la ceinture circonférentielle et la carcasse (10) ; et
le bandage pneumatique (1) comprend en outre une partie de gomme de coussin (60), agencée sur le côté externe, dans la direction radiale, de la partie de gomme à génération de chaleur réduite (50), de sorte qu'une extrémité arrière (60a) sur le côté interne, dans sa direction de la largeur, est insérée entre la couche de ceinture circonférentielle (20a) et la couche de ceinture à intersection (30) ;
dans lequel le module d'élasticité de la partie de gomme à génération de chaleur réduite (50) est ajusté de sorte à être égal ou supérieur au module d'élasticité de la gomme de revêtement, servant de revêtement de la couche de ceinture (20a), le module d'élasticité de la partie de gomme de coussin étant ajusté de sorte à être égal ou inférieur au module d'élasticité de la gomme de revêtement, servant de revêtement de la couche de ceinture circonférentielle (20a).

2. Bandage pneumatique (1) selon la revendication 1, dans lequel une partie d'extrémité (50f) sur le côté externe, dans la direction de la largeur du bandage pneumatique, de la partie de gomme à génération de chaleur réduite (50), s'étend vers une partie d'épaulement (3).

3. Bandage pneumatique (1) selon la revendication 1, dans lequel :
une largeur W1 de la couche de ceinture interne (31) est ajustée de sorte à dépasser une largeur W2 de la couche de ceinture externe (32) de 10 à 50 mm au niveau de chaque côté dans la direction de la largeur du bandage pneumatique ;
sous condition qu'une largeur de la couche de ceinture circonférentielle (20a) correspond à W3, W1, W2 et W3 satisfont une formule relationnelle de W2 ≤ W3 ≤ W1 ; et
une largeur de la couche de ceinture, ayant la largeur maximale parmi les couches de ceinture de la couche de ceinture à intersection (30) représente au moins 80% de la largeur maximale W4, dans la direction de la largeur du bandage pneumatique, de la carcasse (10), dans une section de celle-ci dans la direction de la largeur du bandage pneumatique.
